# EUROPEAN PATENT SPECIFICATION

(11) **EP 3 810 723 B1**
(45) Date of publication and mention of the grant of the patent: **21.02.2024**
(21) Application number: 19730857.0
(22) Date of filing: 20.06.2019
(51) Int. Cl.: C09K 15/30, C08K 5/00, C09D 167/08, C09F 9/00

(54) **COATING COMPOSITION**
BESCHICHTUNGSZUSAMMENSETZUNG
COMPOSITION DE REVÊTEMENT

(30) Priority: 22.06.2018 EP 18179397
(43) Date of publication of application: 28.04.2021
(73) Proprietor: PPG Europe B.V., 1422 AD Uithoorn (NL)
(72) Inventor: WEIJNEN, John, 2408 KA, Alphen aan den Rijn (NL)
(74) Representative: Appleyard Lees IP LLP
(86) International application number: PCT/EP2019/066408
(87) International publication number: WO 2019/243546

(56) References cited:
- WO-A2-2017/134463
- GB-A- 1 435 835
- US-A- 2 852 405
- US-A1- 2003 096 893
- US-B2- 9 896 603

## Description

### FIELD

The present disclosure relates in general to coating compositions comprising an auto-oxidisable alkyd binder and, in particular, to said compositions comprising silica particles.

### BACKGROUND

Autoxidisable alkyd resins are long-established binder polymers for film-forming coating compositions acknowledged for their aesthetic properties, low surface tension (which enables the wetting of and adhesion on a wide variety of substrates and facilitates pigment wetting), applicability by various techniques, and cost-effectiveness. Because of these properties, alkyd resins are the most widely used air drying binders in coating compositions. Autoxidisable alkyd resins comprise drying or semi-drying unsaturated fatty acids or oils, which are chemically grafted to the polyester backbone of polyols and polycarboxylic acids. When the coating composition is applied to a substrate, the drying process starts by solvent evaporation and the unsaturated fatty acid side chains of the binder undergo autoxidation and subsequently form cross-links between the polymer chains resulting in a solid and coherently dried film. The drying process of autoxidisable alkyd resins takes place in the presence of oxygen under ambient or forced drying conditions, whereby the presence of oxygen is essential. The time for such compositions to dry depends on the concentration and type of unsaturated oil or fatty acids used to prepare the resin. Autoxidation and crosslinking of the unsaturated oil/fatty acid side chains can proceed unaided, but the time for drying is generally found to be unacceptably long for many practical applications. The curing is significantly accelerated by the addition of a metal-based drying catalyst, commonly referred to as a "drier" or "siccative".

These metal salts, containing either alkaline, alkaline-earth or transition metals, affect the autoxidation of the binder with air and/or catalyse cross-linking of the unsaturated moieties. The drying time can consequently be reduced from days to hours. The presence of efficient driers is therefore essential for the drying of air-drying coating compositions.

These catalytic oil drying agents are commonly divided into three main classes according to their catalytic activity: primary driers, which all possess significant catalytic activity, coordination driers, which promote the film-forming process by bridging two or multiple polymer chains, and secondary driers, which have little to no catalytic effect when used on their own but assist the drying process by activating the metal in the primary drier.

The most widely used primary driers are cobalt carboxylates because of their good drying performance at ambient temperature and because they do not unduly affect the colour of the final coating composition. However, because of the toxicity profile and suspected carcinogenicity of particular cobalt salts, it is desirable to find alternative drier compounds that show a drying performance which is comparable or better than that of cobalt based driers and can replace cobalt based driers in alkyd based oxidatively drying coatings. WO 2017/134463 A2 relates to a method of preparing an oxidatively curable coating formulation made from an oxidatively curable alkyd-based resin, a complex comprising one or more manganese ions and one or more triazacyclononane-based ligands; and to the use of triazacyclononane-based ligands for accelerating the rate of curing of an alkyd-based resin formulation by such complexes.

However, known cobalt-free driers have been found to have unsuitable drying times in the presence of synthetic silicas, which are commonly used as matting agents in alkyd based coatings.

### SUMMARY

The present disclosure relates to a solvent borne coating composition comprising an auto-oxidisable alkyd binder, silica particles, a curing accelerator and a solvent. The curing accelerator comprises a manganese ion-containing salt or an iron ion-containing salt and an organic ligand suitable for stabilising the manganese ion- or iron ion-containing salt. The organic ligand comprises at least two nitrogen atoms and at least two hydroxyl groups.

According to a second aspect, the present disclosure also relates to the use of the coating composition according to the first aspect in a varnish, lacquer, paint, stain, enamel, printing ink or floor covering.

According to a third aspect, the present disclosure also relates to a substrate having applied thereon a coating composition according to the first aspect.

### DESCRIPTION

When describing the compositions of the disclosure, the terms used are to be construed in accordance with the following definitions, unless a context dictates otherwise.

As used in the specification and the appended claims, the singular forms "a", "an," and "the" include both singular and plural referents unless the context clearly dictates otherwise. By way of example, "a binder" means one binder or more than one binder. References to a number when used in conjunction with comprising language include compositions comprising said number or more than said number.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

As used herein, the term "and/or," when used in a list of two or more items, means that any one of the listed items can be employed by itself or any combination of two or more of the listed items can be employed. For example, if a list is described as comprising group A, B, and/or C, the list can comprise A alone; B alone; C alone; A and B in combination; A and C in combination, B and C in combination; or A, B, and C in combination.

The term "about" as used herein when referring to a measurable value such as a parameter, an amount, a temporal duration, and the like, indicate that a value includes the standard deviation of error for the device or method being employed to determine the value. The term "about" is meant to encompass variations of +/-10% or less, +/-5% or less, or +/-0.1 % or less of and from the specified value, insofar such variations are appropriate to perform in the disclosure. It is to be understood that the value to which the modifier "about" refers is itself also specifically disclosed.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Unless otherwise defined, all terms used in the disclosure, including technical and scientific terms, have the meaning as commonly understood by one of ordinary skill in the art to which this disclosure belongs. By means of further guidance, definitions for the terms used in the description are included to better appreciate the teaching of the present disclosure.

Whenever the term "substituted" is used herein, it is meant to indicate that one or more hydrogens on the atom indicated in the expression using "substituted" is replaced with a selection from the indicated group, provided that the indicated atom's normal valency is not exceeded, and that the substitution results in a chemically stable compound, i.e. a compound that is sufficiently robust to survive isolation from a reaction mixture. When the term "optionally substituted" is used herein at the start of a list of chemical species it is meant to indicate that all of the species in the list which can be substituted may be optionally substituted; that is it is not meant that only the first species mentioned in the list may be optionally substituted. The term optionally substituted when used herein means unsubstituted or substituted with a suitable group.

Where groups can be substituted, substituents may be selected from but not limited to, for example, the group comprising halogen, alkyl, haloalkyl, haloalkyloxy, hydroxyl, hydroxyalkyl, amino, aminoalkyl, carboxyl, a nitro group, a nitrile group, an imine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group.

For the purpose of the present disclosure, an aliphatic group is a hydrocarbon moiety that may be straight chain or branched and may be completely saturated, or contain one or more units of unsaturation, but which is not aromatic. The term "unsaturated" means a moiety that has one or more double and/or triple bonds. The term "aliphatic" is therefore intended to encompass alkyl, alkenyl or alkynyl groups, and combinations thereof.

The term "hydroxyl" or "hydroxy" as used herein refers to the group -OH.

The term "carboxy" or "carboxyl" as used herein refers to the group -C(=O)OH.

The term "alk" or "alkyl", as used herein unless otherwise defined, relates to saturated hydrocarbon radicals being straight, branched, cyclic or polycyclic moieties or combinations thereof and contain 1 to 20 carbon atoms, suitably 1 to 10 carbon atoms, more suitably 1 to 8 carbon atoms, still more suitably 1 to 6 carbon atoms, yet more suitably 1 to 4 carbon atoms. These radicals may be optionally substituted with a chloro, bromo, iodo, cyano, nitro, OR⁴, OC(O)R⁵, C(O)R⁶, C(O)OR⁷, NR⁸R⁹, C(O)NR¹⁰R¹¹, SR¹², C(O)SR¹², C(S)NR¹⁰R¹¹, aryl or heteroatom, wherein R⁴ to R¹² each independently represent hydrogen, aryl or alkyl, and/or be interrupted by oxygen or sulfur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having a double bond, suitably up to 4, double bonds, being straight, branched, cyclic or polycyclic moieties or combinations thereof and containing from 2 to 18 carbon atoms, suitably 2 to 10 carbon atoms, more suitably from 2 to 8 carbon atoms, still more suitably 2 to 6 carbon atoms, yet more suitably 2 to 4 carbon atoms. These radicals may be optionally substituted with a hydroxyl, chloro, bromo, iodo, cyano, nitro, OR⁴, OC(O)R⁵, C(O)R⁶, C(O)OR⁷, NR⁸R⁹, C(O)NR¹⁰R¹¹, SR¹², C(O)SR¹², C(S)NR¹⁰R¹¹, or aryl, wherein R⁴ to R¹² each independently represent hydrogen, aryl or alkyl, and/or be interrupted by oxygen or sulfur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, -CH=CH-, when represented as an alkenylene. Other alkenylene groups should be understood accordingly.

The term "alkynyl", as used herein, relates to hydrocarbon radicals having a triple bond, suitably up to 4, triple bonds, being straight, branched, cyclic or polycyclic moieties or combinations thereof and having from 2 to 18 carbon atoms, suitably 2 to 10 carbon atoms, more suitably from 2 to 8 carbon atoms, still more suitably from 2 to 6 carbon atoms, yet more suitably 2 to 4 carbon atoms. These radicals may be optionally substituted with a hydroxy, chloro, bromo, iodo, cyano, nitro, OR⁴, OC(O)R⁵, C(O)R⁶, C(O)OR⁷, NR⁸R⁹, C(O)NR¹⁰R¹¹, SR¹², C(O)SR¹², C(S)NR¹⁰R¹¹, or aryl, wherein R⁴ to R¹² each independently represent hydrogen, aryl or lower alkyl, and/or may be interrupted by oxygen or sulfur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C=CH, becomes ethynylene, -C=C-, when represented as an alkynylene. Other alkynylene groups should be understood accordingly.

As used herein, the terms "heteroalkyl", "heteroalkenyl" and "heteroalkynyl" refer to an alkyl, alkenyl or alkynyl group containing one or more S, N, O, P, or Si atoms, meaning an alkyl as defined herein which comprises one or more heteroatoms in the hydrocarbon chain, whereas the heteroatoms may be positioned at the beginning of the hydrocarbon chain, in the hydrocarbon chain or at the end of the hydrocarbon chain. Examples of heteroalkyl groups include alkoxy, alkoxyalkyl, alkylamino, alkylaminoalkyl, alkylthio, and alkylthioalkyl groups.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR⁴, OC(O)R⁵, C(O)R⁶, C(O)OR⁷, NR⁸R⁹, C(O)NR¹⁰R¹¹, SR¹², C(O)SR¹², C(S)NR¹⁰R¹¹, or aryl, wherein R⁴ to R¹² each independently represent hydrogen, aryl or lower alkyl, and/or may be interrupted by oxygen or sulfur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

When the suffix "ene" is used in conjunction with a chemical group, e.g. "alkylene", this is intended to mean the group as defined herein having two points of attachment to other groups. As used herein, the term "C₁₋₁₂alkylene", by itself or as part of another substituent, refers to C_{1- 12}alkyl groups that are divalent, i.e., with two points of attachment to two other groups. Alkylene groups may be linear or branched and may be substituted as indicated herein. Non-limiting examples of alkylene groups include methylene (-CH₂-), ethylene (-CH₂-CH₂-), methylmethylene (-CH(CH₃)-), 1-methyl-ethylene (-CH(CH₃)-CH₂-), n-propylene (-CH₂-CH₂-CH₂-), 2-methylpropylene (-CH₂-CH(CH₃)-CH₂-), 3-methylpropylene (-CH₂-CH₂-CH(CH₃)-), n-butylene (-CH₂-CH₂-CH₂-CH₂-), 2-methylbutylene (-CH₂-CH(CH₃)-CH₂-CH₂-), 4-methylbutylene (-CH₂-CH₂-CH₂-CH(CH₃)-), pentylene and its chain isomers, hexylene and its chain isomers, heptylene and its chain isomers, octylene and its chain isomers, nonylene and its chain isomers, decylene and its chain isomers, undecylene and its chain isomers, dodecylene and its chain isomers. As set out above in relation to the terms "heteroalkyl", "heteroalkenyl" and "heteroalkynyl", the terms "heteroalkylene", "heteroalkenylene" and "heteroalkynylene" refer *mutatis mutandis* to an alkylene, alkenylene or alkynylene group containing one or more S, N, O, P, or Si atoms.

When the term "alkyl" is used as a suffix following another term, as in "hydroxyalkyl," this is intended to refer to an alkyl group, as defined above, being substituted with one or two substituent(s) selected from the other, specifically-named group, also as defined herein. The term "hydroxyalkyl" therefore refers to a -R¹³-OH group wherein R¹³ is alkylene as defined herein. The term "alkoxy" or "alkyloxy", as a group or part of a group, refers to a group having the Formula -OR¹⁴ wherein R¹⁴ is alkyl as defined herein above.

The term "amino" refers to the group -NH₂.

The term "ether" includes both mono and polyethers and refers to groups having a chain containing carbon and oxygen and each of these units suitably comprises 1 to 12 carbons for each oxygen atom. Examples are dimethyl, diethyl and dipropyl ethers, polyethyleneoxide, polypropyleneoxide, polyethylene glycol, polybutyleneoxide.

The term "halo" or "halogen" as a group or part of a group is generic for fluoro, chloro, bromo, and iodo, suitably to F, Cl, Br, and I, more suitably to F, Cl, and Br. For example, the term "haloalkyl" as a group or part of a group, refers to an alkyl group having the meaning as defined above wherein one or more hydrogens are replaced with one or more halogen as defined above.

A silyl group is suitably a group -Si(R¹⁵)3, wherein each R¹⁵ can be independently an aliphatic, heteroaliphatic, alicyclic, heteroalicyclic, aryl or heteroaryl group as defined above. Suitably, each R¹⁵ is an alkyl group selected from methyl, ethyl or propyl.

A silyl ether group is suitably a group OSi(R¹⁶)₃ wherein each R¹⁶ can be independently an aliphatic, heteroaliphatic, alicyclic, heteroalicyclic, aryl or heteroaryl group as defined above. Exemplary silyl ether groups include OSi(Me)₃, OSi(Et)₃, OSi(Ph)₃, OSi(Me)₂(tBu), OSi(tBu)₃ and OSi(Ph)₂(tBu).

A nitrile group (also referred to as a cyano group) is a group CN.

An imine group is a group -CRNR, suitably a group -CHNR¹⁷ wherein R¹⁷ is an aliphatic, heteroaliphatic, alicyclic, heteroalicyclic, aryl or heteroaryl group as defined above.

An acetylide group contains a triple bond -C≡C-R¹⁸, suitably wherein R¹⁸ can be hydrogen, an aliphatic, heteroaliphatic, alicyclic, heteroalicyclic, aryl or heteroaryl group as defined above.

The term "cycloalkyl", as a group or part of a group, refers to a cyclic alkyl group, that is a monovalent, saturated, hydrocarbyl group having 1 or more cyclic structure, and comprising from 3 to 12 carbon atoms, suitably from 3 to 9 carbon atoms, suitably from 3 to 6 carbon atoms, suitably from 5 to 6 carbon atoms. Cycloalkyl includes all saturated hydrocarbon groups containing 1 or more rings, including monocyclic or bicyclic groups. The further rings of multi-ring cycloalkyls may be either fused, bridged and/or joined through one or more spiro atoms. When a subscript is used herein following a carbon atom, the subscript refers to the number of carbon atoms that the named group may contain. For example, the term "C₃₋₆cycloalkyl", a cyclic alkyl group comprising from 3 to 6 carbon atoms, suitably from 5 to 6 carbon atoms. Examples of cycloalkyl groups include but are not limited to cyclopropyl, cyclobutyl, cyclopentyl, cyclohexyl. When the suffix "ene" is used in conjunction with a cycloalkyl group, i.e. cycloalkylene, this is intended to mean the cycloalkyl group as defined herein having two single bonds as points of attachment to other groups.

The term "stabilising" when used in relation to the interaction between the organic ligand and the manganese or iron ion-containing salt, refers to any suitable means by which the ligand may increase the stability of the manganese or iron ion-containing salt in the composition. For example the organic ligand may form a complex with the manganese or iron ion of the salt, suitably the complex may be a chelate complex.

Suitable features of the compositions of the disclosure are now set forth.

The solvent borne coating composition of the present disclosure comprises an auto-oxidisable alkyd binder, silica particles, a curing accelerator, wherein the curing accelerator comprises a manganese ion- or iron ion-containing salt; and an organic ligand suitable for stabilising the manganese or iron ion-containing salt, the organic ligand comprising at least two nitrogen atoms and at least two hydroxyl groups, and a solvent.

### CURING ACCELERATOR

Suitably the manganese ion-containing salt is an Mn(II), Mn(III) or Mn(IV) containing salt. Suitably the iron-ion containing salt is an Fe(ll) or Fe(lll) containing salt.

Suitably the manganese ion- or iron ion-containing salt may comprise a carboxylate salt or a β-diketonate salt.

Suitably the manganese ion- or iron ion-containing salt may be a neodecanoate, octoate, tallate, linoleate, naphthenate, acetylacetonate, benzoylacetone, or dibenzoylmethane salt.

Suitable manganese salts include manganese carboxylates such as manganese neodecanoate, manganese octoate, manganese tallate, manganese linoleate, and manganese naphthenate and manganese β-diketonates such as manganese(II) acetylacetonate, manganese(III) acetylacetonate, manganese (II) benzoylacetone, and manganese (II) dibenzoylmethane.

Suitable iron salts include iron carboxylates such as iron neodecanoate, iron octoate, iron tallate, iron linoleate, and iron naphthenate and iron β-diketonates as iron (II) acetylacetonate, iron (III) acetylacetonate, iron (III) benzoylacetone, and iron (III) dibenzoylmethane.

Suitably the nitrogen atoms and hydroxyl groups of the organic ligand are capable of chelating the manganese or iron component of the relevant salts to form a complex.

Suitably the organic ligand has a molecular weight of less than 500g/mol.

Suitably the organic ligand comprises a material of Formula I: 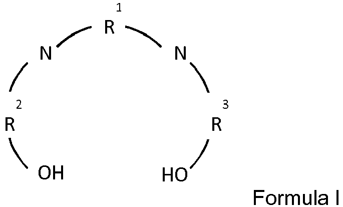 wherein R¹, R² and R³ are each divalent organic moieties.

By divalent organic moiety is meant any organic component capable of linking to another chemical component, in this case the nitrogen atoms and/or the hydroxyl groups of Formula I, *via* two separate points of attachment. The points of attachment may comprise single, double or triple chemical bonds.

Suitably R¹, R² and R³ are each independently selected from optionally substituted alkylene, alkenylene, alkynylene, heteroalkylene, heteroalkenylene, heteroalkynylene, arylene, heteroarylene and cycloalkylene, wherein alkylene, alkenylene, alkynylene, heteroalkylene, heteroalkenylene and heteroalkynylene, may optionally be interrupted by aryl, heteroaryl, alicyclic or heteroalicyclic.

R² and R³ may be the same.

Suitably the organic ligand comprises a material of Formula II 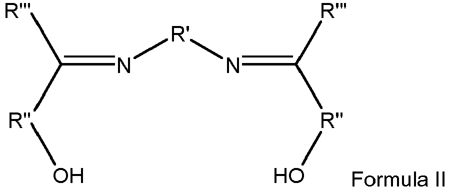
wherein R' may be selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
each R" may be independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
each R‴ may be independently selected from hydrogen, halogen, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
and wherein when R' is a substituted alkylene, each R‴ together with a substituent on R' may form a heterocylic ring comprising the nitrogen atom or both R‴ together with more than one substituent on R' may form a heterocyclic system comprising both nitrogen atoms.

R' may comprise an optionally substituted alkylene, such as optionally substituted ethylene or propylene.

R" may comprise an optionally substituted alkylene or arylene.

R" may comprise an optionally substituted arylene, such as phenylene, suitably 1,2-phenylene.

Both R‴ together with more than one substituent on R' may form a bipyridylene or phenanthrolylene group comprising both nitrogen atoms.

Suitably the organic ligand may be a ligand of Formula III 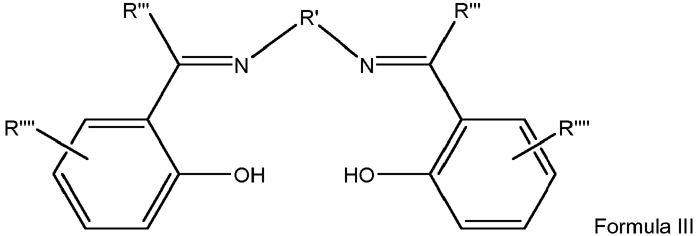
wherein R' is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
each R‴ is independently selected from hydrogen, halogen, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
each Rʺʺ is independently selected from hydrogen, halogen, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
and wherein when R' is a substituted alkylene, each R‴ together with a substituent on R' may form a heterocylic ring comprising the nitrogen atom or both R‴ together with more than one substituent on R' may form a heterocyclic system comprising both nitrogen atoms.

Suitably the organic ligand may be a ligand of Formula IV 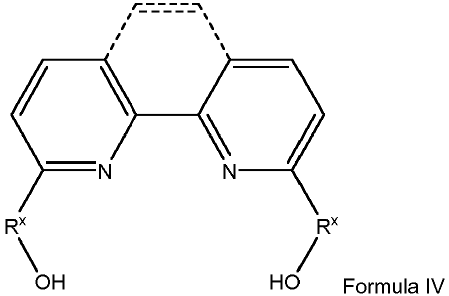 wherein R^{x} is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic; and wherein 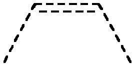 is optionally present.

Suitably the organic ligand may be selected from the following group: 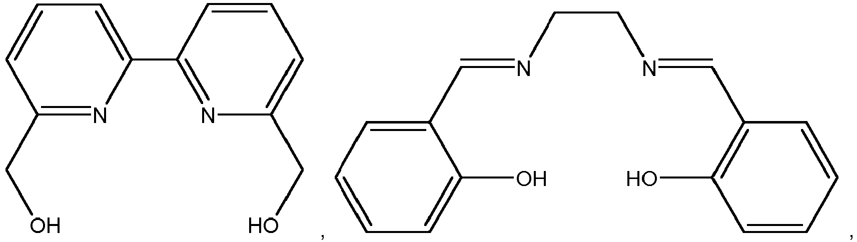 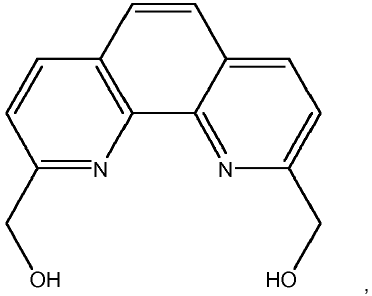 or

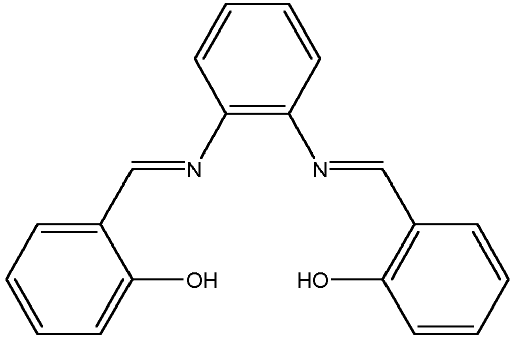

The percentage of manganese or iron in the composition may be dependent on the type of binder used. However, suitably the percentage of manganese or iron in the total composition is 0.001 to 0.5% by weight, more suitably 0.01 to 0.5%, or 0.02 to 0.1%, most suitably 0.02 to 0.06%.

The percentage of manganese or iron may alternatively be defined in terms of the solid metal content relative to the solid binder content. Suitably the percentage of solid metal on solid binder is 0.0005 to 5% by weight, more suitably 0.0005 to 0.25% by weight, more suitably 0.005 to 0.25%, or 0.01 to 0.05%, most suitably 0.02-0.06% by weight

Suitably the ratio of manganese or iron to organic ligand by weight is between 1:10 and 10:1, more suitably between 0.5:1 and 2:1, most suitably 1:1.

Suitably the ligand may be dissolved in a suitable solvent in which the ligand is soluble prior to addition of the ligand to the composition. The solvent may comprise a polar organic solvent. Suitable polar organic solvents include glycol ethers such as propylene glycol monomethyl ether and dipropylene glycol n-butyl ether and short chain ketones such as methyl ethyl ketone. Typically the ligand may be dissolved in a polar organic solvent at a concentration of between 2% and 7% w/w, suitably between 2.5% and 5% w/w. Where possible the ligand may be dissolved in a suitable solvent at a concentration of 10% w/w, 20% w/w or 30% w/w.

The ligand may be mixed with the manganese or iron ion-containing salt prior to addition of both components to the composition. Alternatively the manganese or iron ion-containing salt may be added separately, either before, or after the ligand. One or both of the ligand and the metal ion containing salt may be dissolved in a polar organic solvent prior to addition to the composition.

### AUTO-OXIDISABLE ALKYD BINDER

The auto-oxidisable alkyd binder may be any suitable auto-oxidisable alkyd binder. As used herein, the term "alkyd binder" or "alkyd resin" are used interchangeably. Suitable autoxidisable alkyd resins for use in the disclosure, are in general the reaction product of the esterification of polyhydric alcohols with polybasic acids (or their anhydrides) and unsaturated fatty acids (or glycerol esters thereof).

Suitable polycarboxylic acids include for example citraconic acid, citric acid, fumaric acid, mesaconic acid, maleic acid, phthalic acid, isophthalic acid, terephthalic acid, trimellitic acid, succinic acid, pyromellitic acid or their anhydrides or esters. Suitably the polycarboxylic acids are dicarboxylic acids.

Suitable polyol compounds include ethylene glycol, 1,3-propane diol, 1,6-hexanediol. glycerol, trimethylol ethane, trimethylol propane, pentaerythritol, sorbitol and etherification products of these compounds such as di-, tri- and tetrapentaerythritol.

Suitably the fatty acids are polyunsaturated fatty acids, for example derived from linseed oil, tung oil, tall oil, sunflower oil, soybean oil as well as from other drying or semi-drying oils.

Suitably the oils from which the fatty acids are derived are drying or semi-drying oils. Suitably the oils have iodine values of 100-130 mg/g, more suitably of 110-120 mg/g.

Unsaturated groups may also be present in the polyols or polycarboxylic acids or other building blocks used.

A specific example of a suitable alkyd is the condensation product of soybean oil fatty acids, benzoic acid, pentaerythritol and phthalic anhydride having CAS number 6722-76-3.

Alkyd resins are well-known in the art and need not be further described herein. The properties are primarily determined by the nature and the ratios of the alcohols and acids used and by the degree of condensation. Suitable alkyds include long oil, very long oil and medium oil alkyd resins e.g. derived from 45 to 85 wt% of fatty acids, suitably derived from 45 to 70 wt% of fatty acids. As used herein, the term "long oil alkyd" refers to alkyd with an oil content of between 60 and 75 wt%, and a fatty acid content of 57 to 70 wt%. As used herein, the term "medium oil alkyd" refers to alkyd with an oil content of between 45 wt% and 60 wt%, and a fatty acid content of 42 to 57 wt%. As used herein, the term "very long oil alkyd" refers to alkyd with an oil content of between 75 and 85 wt%, and a fatty acid content of 70 to 80 wt%. Suitably, the alkyd may be a medium oil alkyd. Suitably, the alkyd may be a long oil alkyd. Suitably, the alkyd may be a very long oil alkyd.

To improve the performance of the resins, the composition of the long oil and medium oil alkyd may be modified. For example, polyurethane modified alkyds, silicone modified alkyds, styrene modified alkyds, acrylic modified alkyds (e.g. (meth)acrylic modified alkyds), vinylated alkyds, polyamide modified alkyds, and epoxy modified alkyds or mixtures thereof are also suitable alkyd resins to be used in the present composition.

Suitably, said autoxidisable alkyd binder is selected from a medium or long oil unmodified alkyd, a silicone modified alkyd, a polyurethane modified alkyd, acrylic modified alkyd, polyamide modified alkyd, or a combination thereof. Suitably, said alkyd binder is a long oil (unmodified) alkyd, a silicone modified alkyd, a polyurethane modified alkyd, acrylic modified alkyd, polyamide modified alkyd, or a combination thereof.

The amount of alkyd binder in the present compositions can typically range from 10 to 98 % by weight, such as 15 to 90 % by weight, suitably 20 to 80 % by weight, suitably 25 to 70 % by weight based on the total weight of the composition.

Suitably, the alkyd binder has a solids content of 50%, 55%, 60%, 65%, 70%, whereby the solids content is defined as non-volatile solids content or non-volatile matter or nvm. As used herein, the term "solids content" refers to the proportion of non-volatile material contained in a binder or formulation. More details on how the solids content may be measured can be found in ISO3251.

Suitably the alkyd binder comprises 30% by weight of the total composition, suitably 40%, 50% or 60%. Suitably the alkyd binder comprises between 40 and 60% by weight of the total composition, suitably 50% of the total composition.

The alkyd may comprise further primary driers in addition to the manganese or iron ion-containing salt. Primary driers (also called top driers, surface driers or oxidation driers), promote the top-down hardening of a liquid alkyd resin. The mode of action of the primary driers in the autoxidative curing process is deactivation of natural occurring anti-oxidants, oxygen uptake, peroxide formation and peroxide decomposition. Primary driers are characterized by having at least two accessible valence states which allows catalytic hydroperoxide decomposition and regeneration of the active species. Examples of primary driers are cobalt (Co), cerium (Ce), lead (Pb), iron (Fe), manganese (Mn) and vanadium (V) carboxylates.

To enhance homogeneous through drying of a coating film, the composition may further comprise a secondary or coordination drier.

Coordination driers, also referred to synonymously as through driers, promote the film-forming process by interaction with the carboxyl and hydroxyl groups in the polymeric binder. This way, coordination driers can bridge two or more polymer chains. The carboxyl and hydroxyl groups may be initially present in the binder molecule or formed during the autoxidation process. Typical coordination driers may be selected from the group comprising zirconium (Zr), strontium (Sr), aluminium (Al), bismuth (Bi), lanthanum (La), and neodymium (Nd) based metal driers.

Secondary driers are also referred to synonymously as auxiliary driers. These metal driers exist in a single oxidation state and are not catalytically active by themselves. However, secondary driers do affect the rate-of-dry by interacting with the primary driers. Typical secondary driers may be selected from calcium (Ca), barium (Ba), potassium (K) and lithium (Li) metal soaps.

Typically the composition according to the present disclosure may be substantially free or completely free of polydentate ligands which do not comprise at least two nitrogen atoms and at least two hydroxyl groups. Typically the composition may be substantially free or completely free of 2,2-bipyridyl, imidazoles, pyrazoles, aliphatic and aromatic amines, 1,10-phenanthrolin, 1,4,7-trimethyl-1,4,7-tri-azacyclononane, and the like. These polydentate ligands are typically capable of chelating the transition metal ions by the formation of coordination bonds between the nitrogen electron donor atoms of the ligand and the transition metal ion.

### SILICA

The silica particles may be any suitable silica particles. Typically the silica particles are synthetic amorphous silica particles. Such silica particles are typically used as a matting agent for alkyd paints. Without wishing to be bound by theory, matting by synthetic amorphous silica in coatings is believed to be the result of shrinkage of the drying coating layer due to solvent or water evaporation during drying and film formation. This shrinkage of the paint layer leads to the surface of the paint film deforming around the silica particles resulting in a micro rough surface structure. The incident light is scattered by the micro rough surface in a wide-angle cone conveying the impression of low gloss or matt appearance.

Typically, synthetic silicas conventionally used as matting agents have high specific surface area, high pore volume and high oil absorption numbers.

The BET specific surface area of suitable amorphous silica grades is generally in the range 250 to 800 m²/g and suitably in the range 300 to 600 m²/g. BET surface area may be measured according to ISO9277.

Examples of suitable amorphous silica types are Lo-Vel commercially available from PPG, Acematt commercially available from Evonik, Syloid commercially available from Grace, Gasil commercially available from PQ Corporation, and HDK commercially available from Wacker.

The silica particles may be any size which is suitable for mattifying the composition and the suitable size may vary depending on the intended use of the composition. Typically however, the silica particles will have a diameter of 1-100 microns, suitably 1-60, 2-50, 2-30, or 2-10 microns. Silica particle size may be measured by laser diffraction particle size distribution techniques, for example as set out in ISO 13320.

Suitably the composition comprises 1 to 10% silica by weight, suitably 2 to 6% silica by weight, suitably 3 to 5% silica by weight.

### SOLVENT

As used herein, the term "solvent-borne coating composition" refers to a composition that utilizes one or more volatile organic materials as the primary dispersing medium. Similarly, the term "solvent" refers to a non-aqueous solvent, suitably an organic solvent. According to certain disclosures, the coating compositions of the present disclosure can be substantially free of water, or, in some cases, completely free of water.

Suitable solvents for use in the compositions of the disclosure include aliphatic, cycloaliphatic, aromatic hydrocarbons and oxygenated solvents, such as hexane, heptane, octane, isooctane, cyclohexane, cycloheptane, toluene and xylene; isoparafins; ketones, such as methyl ethyl ketone and methyl isobutyl ketone; alcohols, such as isopropyl alcohol, normal-butyl alcohol and normal-propyl alcohol; monoethers of glycols, such as the monoethers of ethylene glycol and diethylene glycol; di-ethers of glycols such as dipropylene glycol dimethyl ether; monoether glycol acetates, such as 2-ethoxyethyl acetate; as well as compatible mixtures thereof. As examples of such solvents may be mentioned hydrocarbon solvents available under the trademarks Shellsol^{®} H, Shellsol^{®} K, Shellsol^{®} D40, Shellsol^{®} D60, Shellsol^{®} D70, and Shellsol^{®} AB, all from Shell Chemicals, the Netherlands, the trademarked Solvesso^{®} 150 solvent from Esso and also: Exxsol^{®} D40, Exxsol^{®} D60 and Exxsol^{®} D80, and solvents such as ethyl diglycol, ethyl glycol acetate, butyl glycol, butyl glycol acetate, butyl diglycol, butyl diglycol acetate, and methoxypropylene glycol acetate.

Suitably the solvent may be a non-aromatic solvent. Suitably the solvent may be an aliphatic hydrocarbon solvent. Suitably the solvent is an aliphatic hydrocarbon solvent, suitably a high-boiling aliphatic hydrocarbon solvent, such as Shellsol^{®} D40 and D60. (The boiling point range for Shellsol^{®} D40 is 163 - 196 °C and for D60: 177 - 213 °C). Typically, the solvent may be present as 5% or more by weight of the composition. Typically as 7% or more by weight of the composition. Typically, the solvent may form less than 15% by weight of the composition, typically less than 10% of the composition.

As used herein, the term "organic compound" or "organic material" refers to any compound containing the element carbon and one of hydrogen, oxygen, sulfur, phosphorus, silicon, nitrogen, or a halogen, with the exception of carbon oxides and inorganic carbonates and bicarbonates.

As used herein, the term "substantially free" means that the material being discussed is present in the composition, if at all, as an incidental impurity. In other words, the material does not affect the properties of the composition. As used herein, the term "completely free" means that the material being discussed is not present in the composition at all.

### OTHER INGREDIENTS

Suitably, the coating compositions of the present disclosure comprise a colorant. The colorant component of the coating composition may comprise one or more inorganic or organic, transparent or non-transparent pigments. Non-limiting examples of such pigments are titanium dioxide, iron oxides, mixed metal oxides, bismuth vanadate, chromium oxide green, ultramarine blue, carbon black, lampblack, monoazo and disazo pigments, anthraquinones, isoindolinones, isoindolines, quinophthalones, phthalocyanine blues and greens, dioxazines, quinacridones and diketo-pyrrolopyrroles; and extender pigments including ground and crystalline silica, barium sulfate, magnesium silicate, calcium silicate, mica, micaceous iron oxide, calcium carbonate, zinc oxide, aluminum hydroxide, and aluminum silicate, gypsum, feldspar, talcum, kaolin, and the like. The amount of pigment that is used to form the coating composition is understood to vary, depending on the particular composition application, and can be zero when a clear composition is desired.

Suitably, the coating composition of the present disclosure further comprises anti-skinning agents and anti-oxidants such as but not limited to methyl ethyl ketoxime, n-butyl ketoxime, cyclohexanone oxime, methyl isobutyl ketoxime, acetone oxime, 2-pentanone oxime, 2-cyclohexylphenol, 4-cyclohexylphenol, mono-tertiary butylhydroquinone, diethyl hydroxylamine, 2-[(1-methylpropyl)amino]ethanol and 2,4-pentadione and the like.

Suitably, the coating composition further comprises an oxime.

Suitably, the coating composition does not include any additional anti-skinning agents, or includes only limited amounts of additional anti-skinning agents. For example, the coating composition may comprise at most 0.01 % by weight of anti-skinning agent other than an oxime, at most 0.001 % by weight, or at most 0.0001 % by weight, based on the total weight of the coating composition. Suitably the coating composition is essentially free of anti- skinning agents other than an oxime. Suitable oximes are such as but not limited to: formaldehyde oxime, acetaldehyde oxime, propionaldehyde oxime, acetone oxime, butyraldehyde oxime, isobutyraldehyde oxime, methyl ethyl ketoxime, 2,3-butanedione monoxime, 4-methylpentan-2-one oxime, 3-methylbutyraldehyde oxime, 2,4-dimethylpentan-3-one oxime, cyclopentanone oxime, hexan-2-one oxime, cyclohexanone oxime, 3-pyridinealdoxime, 4-pyridinealdoxime, heptanal oxime, 5-methylhexan-2-one oxime, benzaldehyde oxime, salicylaldoxime, acetophenone oxime, 2-pentanone oxime and benzophenone oxime. In some disclosures, the coating composition may comprise at most 0.01 % by weight of anti-skinning agent other than methyl ethyl ketoxime, at most 0.001 % by weight, or at most 0.0001 % by weight, based on the total weight of the coating composition. Suitably the coating composition is essentially free of anti-skinning agents other than methyl ethyl ketoxime.

The coating compositions of the present disclosure may include other additives, e.g. catalysts, other pigments and pigment pastes, dyes, fillers, stabilizers, thixotropic agents, anti-sagging agents, anti- oxidants, antifouling agents, anti-gelling agents, bactericides, fungicides, algaecides, insecticides, anti-settling agents, antifoaming agents, slip agents, flow and levelling agents, rheological modifiers, photo-initiators, UV-absorbers, synergists, HALS-radical scavengers, corrosion inhibitors, matting agents, waxes, mineral oils, flame retardants, antistatic agents, loss of dry inhibitors, optical brighteners, adhesion promoters, diluents, elastomers, plasticizers, air release agents, desiccants, anti-crater additives, reinforcing agents, dispersing aids, substrate wetting agents, odorants, corrosion-inhibitive pigments, additional hardeners and additional curable compounds, depending on the application. Certain disclosures of the coating compositions of the present disclosure include surface active agents, such as any of the well known anionic, cationic or nonionic surfactants or dispersing agents. Examples of suitable additives that may be added to the coating composition may be found in Additives Guide, Paint & Coatings Magazine, May 2006. If desired, other resinous materials can be utilized in conjunction with the aforementioned alkyd resins. The metal drier combinations and optionally colorants, pigments and extenders and optionally other additives may be formulated into the coating compositions by mixing and, if appropriate, dispersing and grinding with the liquid binder.

The coating composition may be formulated as a one package coating composition, also referred herein as one-component (1 K) coating composition.

A "1 K" or "one package" composition will be understood as referring to a composition wherein all of the components are maintained in the same container after manufacture, during storage, etc. A "two package" or "2K" composition will be understood as referring to a composition wherein two components are maintained separately until just prior to application. A "multi package" or "multicomponent" composition will be understood as referring to a composition wherein various components are maintained separately until just prior to application.

### COMPOSITION

The coating composition according to the disclosure can be used and/or formulated as varnish, lacquer, paint, stain, enamel, printing ink or floor covering and similar compositions which contain autoxidisable alkyd binders.

Thus according to a further aspect, the present disclosure also relates to the use of the coating composition according to the first aspect of the disclosure in a varnish, lacquer, paint, stain, enamel, printing ink or floor covering.

Suitably to the use of the coating composition according to the first aspect of the disclosure as a paint, suitably as an architectural paint.

### COATED ITEM

According to a further aspect, the present disclosure also relates to a substrate having applied thereon a coating composition according to the first aspect of the disclosure.

The coating compositions of the present disclosure can be applied to various substrates including wood, paper, foam, and synthetic materials (such as plastics including elastomeric substrates), leather, textiles, glass, ceramic, metals (such as iron, steel and aluminum), concrete, cement, brick, and the like.

As a result, the present disclosure is also directed to substrates partially coated with a coating composition of the present disclosure. The substrates may be pre-treated before application of the coating composition. The substrates may be post-treated after application of the coating composition, with any other compositions.

Any known method can be used to apply the coating compositions of the disclosure to a substrate. Non-limiting examples of such application methods are spreading (e.g., with paint pad or doctor blade, or by brushing or rolling), spraying (e.g., air-fed spray, airless spray, hot spray, and electrostatic spray), flow coating (e.g., dipping, curtain coating, roller coating, and reverse roller coating), and electrodeposition. (See generally, R. Lambourne, Editor, Paint and Surface Coating: Theory and Practice, Eilis Horwood, 1987, page 39 et seq.).

The coating compositions of the present disclosure can be applied and fully cured at ambient temperature conditions in the range of from -10°C to 50°C. Curing of said polymer composition according to the disclosure typically can proceed very rapidly, and in general can take place at a temperature within the range of from -10 °C to +50 °C, in particular from 0 °C to 40 °C, more in particular from 3 to 25 °C. However, compositions of the present disclosure may be cured by additional heating.

The coating compositions of the present disclosure may be used as a single coating, a top coating, a base coating in a two-layered system, or one or more layers of a multi-layered system including a clear top coating composition, colorant layer and base coating composition, or as a primer layer. A typical opaque system may comprise: 1 or 2 layers primer and 1 or 2 layers of top coat (a total of 3 layers). Alternative opaque systems may comprise: 1 primer layer, 1 layer of mid coat and 1 layer top coat. Examples of transparent systems may comprise 1 layer of impregnant and 3 layers of top coats or 3 layers of top coat for maintenance work.

### EXAMPLES

Several examples and comparative examples are described hereunder illustrating the effect of the compositions according to the present disclosure on the drying and skinning properties.

Unless otherwise indicated, all parts and all percentages in the following examples, as well as throughout the specification, are parts by weight or percentages by weight respectively. The following test methods were used to evaluate the films and coatings prepared according to the disclosure.

The drying stages of the paint formulations were assessed using a BK-drying recorder (Sheen Instruments Ltd). A wet paint layer is cast on a glass strip 30.5 x 2.5 cm by using a sheen cube with a gap size of 150 µm. A vertical blunt needle is positioned into the freshly applied film loaded by 5 g of brass and then dragged through the drying paint at a speed of 24.4 mm/h in a direction parallel to the length of the coat. A freshly applied alkyd coating is a viscous liquid and the needle penetrates through the coating onto the glass plate and creates a score. As the physical drying and autoxidation of the alkyd coating progresses the viscosity of the drying film rises and the resistance to penetration by the needle increases. During the drying process, the needle creates a typical pattern and the various drying stages can be read off from the scribed pattern.

The drying times were determined in terms of four stages, defined as follows:
Run back: the film flows back together when the stylus moves through it and no groove is formed. This phase is characterised by the evaporation of the solvent from the paint.
Continuous track: the film is starting to set up. It does not flow back together after the stylus moves through it bringing about a groove in the film. In this stage, the viscosity of the pain film has substantially increased. This phase ends when the point of "start of gel tear" is reached.
Gel tear: The stylus rips the surface skin of the film. The film is starting to surface dry but is not through dry.
Surface trace: The stylus leaves a mark on the surface of the film. The phase in characterised by that the film is starting to through dry. At the end of this phase, the resistance becomes total and no further penetration occurs. The alkyd film has reached the status of "through dry".

The following compounds were used:
Nuodex^{®} Drycoat: complex of manganese bis(2-ethylhexanoate) and N,N',N"-trimethyl-1,4,7-triazacyclononane (cas: 1381939-25-8, EC: 937-913-7) equivalent to 1% of Mn, commercially available from Venator.
Troymax^{™} BXCO: complex of manganese bis(2-ethylhexanoate) and 2,2'-bipyridyl, commercially available from Troy Chemical Company BV.
DryMax 2: solution of 20 wt% of 2,2'-bipyridyl in dipropylene glycol monomethyl ether, commercially available from Venator.
DryPlus: solution of 20 wt% of 1,1,4,7,10,10-Hexamethyltriethylenetetramine in dipropylene glycol monomethyl ether, commercially available from Venator.
Lupragen^{®} 205: 2-(dimethylamino)ethyl ether, commercially available from BASF.
Lupragen^{®} 400: N,N,N'-trimethyl-N'-(2-hydroxyethyl)-1,2-ethanediamine, commercially available from BASF.
Lupragen^{®} 600: 1,3,5-Tris[3-(dimethylamino)propyl]hexahydro-1,3,5-triazine, commercially available from BASF.

Table 1 sets out a composition according to the disclosure as Example 1. Comparative examples are set out in Examples 2-8.

**Table1**

| coating composition and test results (quantities given in parts per weight) | | | | | | | | |
|---|---|---|---|---|---|---|---|---|
| | example | comparative examples | | | | | | |
| | 1 | 2 | 3 | 4 | 5 | 6 | 7 | 8 |
| long oil alkyd (76% nvm) | 54,5 | 54,5 | 54,5 | 54,5 | 60,7 | 60,7 | 60,7 | 60,7 |
| pigment dispersant | 1,3 | 1,3 | 1,3 | 1,3 | 0,5 | 0,5 | 0,5 | 0,5 |
| titanium dioxide | 25,5 | 25,5 | 25,5 | 25,5 | 24,1 | 24,1 | 24,1 | 24,1 |
| amorphous silica | 3,9 | 3,9 | 3,9 | 3,9 | | | | |
| high boiling aliphatic hydrocarbon solvent | 7,6 | 7,6 | 7,6 | 7,6 | 6,9 | 6,9 | 6,9 | 6,9 |
| defoamer | 0,3 | 0,3 | 0,3 | 0,3 | 0,7 | 0,7 | 0,7 | 0,7 |
| anti-skinning agent | 0,5 | 0,5 | 0,5 | 0,5 | 0,4 | 0,4 | 0,4 | 0,4 |
| calcium (5%) drier | 3,2 | 3,2 | 3,2 | 3,2 | 4,0 | 4,0 | 4,0 | 4,0 |
| zirconium (18%) drier | 2,4 | 2,4 | 2,4 | 2,4 | 2,1 | 2,1 | 2,1 | 2,1 |
| manganese neodecanoate (8%) | 0,2 | | | | 0,2 | | | |
| N,N'-ethylenebis(salicylimine) (5%) | 1,2 | | | | 1,4 | | | |
| cobalt (3%) | | 0,7 | | | | 0,8 | | |
| Nuodex DryCoat | | | 0,2 | | | | 0,2 | |
| Troymax BXCO | | | | 0,6 | | | | 0,7 |
| | | | | | | | | |

| drying times (hours:minutes) at 23 °C/50% RH | | | | | | | | |
|---|---|---|---|---|---|---|---|---|
| run back | 1:45 | 1:30 | 5:00 | 3:00 | 1:30 | 1:30 | 2:45 | 2:00 |
| start of gel tear | 2:00 | 1:45 | 7:30 | 3:15 | 1:30 | 1:30 | 3:15 | 2:00 |
| end of gel tear | 3:45 | 3:30 | 12:00 | 7:30 | 8:15 | 5:00 | 6:15 | 12:45 |
| end of surface trace | 13:15 | 18:15 | > 24:00 | 19:30 | 17:15 | 13:30 | > 24:00 | > 24:00 |
| | | | | | | | | |

| drying times (hours:minutes) at 5 °C/80% RH | | | | | | | | |
|---|---|---|---|---|---|---|---|---|
| run back | 2:45 | 3:15 | 6:00 | 2:30 | 3:15 | 3:15 | 1:45 | 5:00 |
| start of gel tear | 3:15 | 9:30 | > 24:00 | > 24:00 | 3:15 | 9:00 | 7:30 | 16:30 |
| end of gel tear | 7:15 | 13:15 | > 24:00 | > 24:00 | 8:45 | 18:00 | 10:15 | 20:45 |
| end of surface trace | > 24:00 | > 24:00 | > 24:00 | > 24:00 | > 24:00 | > 24:00 | > 24:00 | > 24:00 |

The results of Table 1 show that in an alkyd gloss formulation, in the absence of amorphous silica, cobalt can be replaced by a manganese ligand complex without a substantial compromise on drying performance at room temperature and at 5 °C (comparative examples 5 - 8).

In an alkyd satin formulation, in the presence of amorphous silica, the drying performance of driers comprising manganese carboxylate and a bidentate ligand (comparative example 4) or a cyclic tridentate ligand (comparative example 3) at room temperature is less compared to the cobalt drier (comparative example 2), while at 5 °C there is hardly any drying performance observed.

In the presence of amorphous silica, the drier composed of manganese carboxylate and an organic ligand comprising at least 2 nitrogen electron donor atoms and at least 2 hydroxyl groups (N,N'-ethylenebis(salicylimine) shows an equivalent or even improved drying performance compared to the cobalt drier (example 1).

Table 2 compares compositions comprising different manganese salts (Borchers^{®} Deca Manganese 8 and Manganese(III) acetylacetonate) in combination with a ligand according to the disclosure and with ligands not according to the disclosure.

**Table 2**

| coating composition and test results (quantities given in parts per weight) | | | | | | | | | | | |
|---|---|---|---|---|---|---|---|---|---|---|---|
| | examples | | comparative examples | | | | | | | | |
| | 9 | 10 | 11 | 12 | 13 | 14 | 15 | 16 | 17 | 18 | 19 |
| long oil alkyd (85% nvm) | 51,3 | 51,3 | 51,3 | 51,3 | 51,3 | 51,3 | 51,3 | 51,3 | 51,3 | 51,3 | 51,3 |
| pigment dispersant | 1,3 | 1,3 | 1,3 | 1,3 | 1,3 | 1,3 | 1,3 | 1,3 | 1,3 | 1,3 | 1,3 |
| titanium dioxide | 24,9 | 24,9 | 24,9 | 24,9 | 24,9 | 24,9 | 24,9 | 24,9 | 24,9 | 24,9 | 24,9 |
| amorphous silica | 3,9 | 3,9 | 3,9 | 3,9 | 3,9 | 3,9 | 3,9 | 3,9 | 3,9 | 3,9 | 3,9 |
| high boiling aliphatic hydrocarbon solvent | 12,3 | 12,3 | 12,3 | 12,3 | 12,3 | 12,3 | 12,3 | 12,3 | 12,3 | 12,3 | 12,3 |
| anti-skinning agent | 0,5 | 0,5 | 0,5 | 0,5 | 0,5 | 0,5 | 0,5 | 0,5 | 0,5 | 0,5 | 0,5 |
| calcium (5%) drier | 3,4 | 3,4 | 3,4 | 3,4 | 3,4 | 3,4 | 3,4 | 3,4 | 3,4 | 3,4 | 3,4 |
| zirconium (18%) drier | 1,2 | 1,2 | 1,2 | 1,2 | 1,2 | 1,2 | 1,2 | 1,2 | 1,2 | 1,2 | 1,2 |
| silicone oil | 0,1 | 0,1 | 0,1 | 0,1 | 0,1 | 0,1 | 0,1 | 0,1 | 0,1 | 0,1 | 0,1 |
| Borchers^{®} Deca Manganese 8 | 0,3 | | | 0,3 | | 0,3 | 0,3 | 0,3 | 0,3 | 0,3 | 0,3 |
| Manganese(III) acetylacetonate (1%) | | 2,5 | | | 2,5 | | | | | | |
| N,N'-Ethylenebis(salicylimine) (5%) | 2,6 | 2,6 | | | | | | | | | |
| cobalt (3%) | | | 1,0 | | | | | | | | |
| DryMax 2 (20%) | | | | | | 0,4 | | | | | |
| DryPlus (30%) | | | | | | | 0,4 | | | | |
| Lupragen 205 (97%) | | | | | | | | 0,1 | | | |
| Lupragen 400 (98.5%) | | | | | | | | | 0,1 | | |
| Lupragen 600 (98%) | | | | | | | | | | 0,1 | |
| Nuodex DryCoat | | | | | | | | | | | 2,5 |
| | | | | | | | | | | | |

| drying times (hours:minutes) at 23 °C/50% RH | | | | | | | | | | | |
|---|---|---|---|---|---|---|---|---|---|---|---|
| run back | 1:00 | 1:30 | 1:50 | 920 | 10:35 | 3:35 | 705 | 8:20 | 8:55 | 9:10 | 7:50 |
| start of gel tear | 1:10 | 1:30 | 205 | 920 | 10:35 | 3:35 | 705 | 13:20 | 8:55 | 9:10 | 7:50 |
| end of gel tear | 220 | 5:30 | 4:25 | 13:50 | 14:20 | 11:35 | 10:20 | 15:30 | 14:50 | 14:50 | 11:10 |
| end of surface trace | 220 | 5:30 | 4:25 | 13:50 | 14:20 | 11:35 | 10:20 | 15:30 | 14:50 | 14:50 | 11:10 |
| | | | | | | | | | | | |

| drying times (hours:minutes) at 5 °C/80% RH | | | | | | | | | | | |
|---|---|---|---|---|---|---|---|---|---|---|---|
| run back | 400 | 9:25 | 7:45 | > 24:00 | > 24:00 | > 24:00 | > 24:00 | 4:50 | > 24:00 | > 24:00 | > 24:00 |
| start of gel tear | 400 | 9:25 | 7:45 | > 24:00 | > 24:00 | > 24:00 | > 24:00 | > 24:00 | > 24:00 | > 24:00 | > 24:00 |
| end of gel tear | 7:00 | 14:00 | 10:30 | > 24:00 | > 24:00 | > 24:00 | > 24:00 | > 24:00 | > 24:00 | > 24:00 | > 24:00 |
| end of surface trace | 7:00 | 14:00 | 12:00 | > 24:00 | > 24:00 | > 24:00 | > 24:00 | > 24:00 | > 24:00 | > 24:00 | > 24:00 |

The results of Table 2 show that In an alkyd satin formulation, in the presence of amorphous silica, the drying performance of driers comprising manganese carboxylate or manganese acetylacetone in the absence of an organic ligand show a reduced drying performance at room temperature and hardly any drying performance at all at 5 °C (comparative examples 13 and 14). The drying performance of a complex drier comprising manganese carboxylate and a bidentate ligand (comparative example 14), manganese carboxylate and a tridentate ligand (comparative example 15), manganese carboxylate and a hexadentate ligand (comparative example 18), manganese carboxylate with ligands with two nitrogen electron donor groups and one oxygen atom (comparative example 16 and 17) and manganese carboxylate with ligands with three nitrogen electron donor groups (comparative example 19) are at room temperature less effective compared to the cobalt drier (comparative example 2), while at 5 °C there is hardly any drying performance observed. In the presence of amorphous silica, the driers comprising manganese carboxylate or manganese β-diketonate and an organic ligand comprising at least two nitrogen electron donor atoms and at least two hydroxyl groups (N,N'-ethylenebis(salicylimine) shows an equivalent or even improved drying performance compared to the cobalt drier (examples 9 and 10).

**Table 3**

| coating composition and test results (quantities given in parts per weight) | | | | | | |
|---|---|---|---|---|---|---|
| | examples | | comparative examples | | | |
| | 20 | 21 | 22 | 23 | 24 | 25 |
| long oil alkyd (85% nvm) | 51,3 | 51,3 | 51,3 | 51,3 | 51,3 | 51,3 |
| pigment dispersant | 1,3 | 1,3 | 1,3 | 1,3 | 1,3 | 1,3 |
| titanium dioxide | 24,9 | 24,9 | 24,9 | 24,9 | 24,9 | 24,9 |
| amorphous silica | 3,9 | 3,9 | 3,9 | 3,9 | 3,9 | 3,9 |
| high boiling aliphatic hydrocarbon solvent | 12,3 | 12,3 | 12,3 | 12,3 | 12,3 | 12,3 |
| anti-skinning agent | 0,5 | 0,5 | 0,5 | 0,5 | 0,5 | 0,5 |
| calcium (5%) drier | 3,4 | 3,4 | 3,4 | 3,4 | 3,4 | 3,4 |
| zirconium (18%) drier | 1,2 | 1,2 | 1,2 | 1,2 | 1,2 | 1,2 |
| silicone oil | 0,1 | 0,1 | 0,1 | 0,1 | 0,1 | 0,1 |
| EGEDry^{®} Iron Octoate 10% | 0,2 | | | 0,2 | 0,2 | 0,2 |
| Octa-Soligen^{®} Manganese 10 | | 0,2 | | | | |
| N,N'-Ethylenebis(salicylimine) (5%) | 2,1 | 2,0 | | | | |
| cobalt (3%) | | | 1,1 | | | |
| DryMax 2 (20%) | | | | | 0,3 | |
| Lupragen 400 (98.5%) | | | | | | 0,1 |
| | | | | | | |

| drying times (hours:minutes) at 23 °C/50% RH | | | | | | |
|---|---|---|---|---|---|---|
| run back | 1:45 | 1:00 | 2:00 | 2:00 | 7:30 | 6:45 |
| start of gel tear | 2:00 | 1:15 | 2:00 | 5:30 | 7:30 | 6:45 |
| end of gel tear | 3:15 | 2:30 | 5:00 | 11:00 | 15:00 | 14:00 |
| end of surface trace | 4:00 | 5:00 | 7:30 | 19:30 | > 24:00 | > 24:00 |
| | | | | | | |

| drying times (hours:minutes) at 5 °C/80% RH | | | | | | |
|---|---|---|---|---|---|---|
| run back | 2:45 | 1:45 | 4:30 | > 24:00 | 19:00 | > 24:00 |
| start of gel tear | 5:15 | 1:45 | 5:00 | > 24:00 | > 24:00 | > 24:00 |
| end of gel tear | 6:15 | 4:15 | 8:30 | > 24:00 | > 24:00 | > 24:00 |
| end of surface trace | 12:00 | 6:00 | 19:00 | > 24:00 | > 24:00 | > 24:00 |

Examples 20 and 21 in Table 3 show that a drier composed of iron octoate or manganese octoate and an organic ligand comprising at least 2 nitrogen electron donor atoms and at least 2 hydroxyl groups (N,N'-ethylenebis(salicylimine) both exhibit a satisfactory drying performance in the presence of amorphous silica. Although the surface drying is slightly slower compared to the cobalt drier, the through drying is faster, signifying a more homogeneous drying performance. The results of Table 3 further show that in an alkyd satin formulation, in the presence of amorphous silica, the drying performance of driers comprising iron octoate in the absence of an organic ligand show a reduced drying performance at room temperature and hardly any drying performance at all at 5 °C (comparative examples 23). The drying performance of a complex drier comprising iron octoate and a bidentate ligand (comparative example 24), and iron octoate with ligands with two nitrogen electron donor groups and one oxygen atom (comparative example 25) are at room temperature less effective compared to the cobalt drier (comparative example 22), while at 5 °C there is hardly any drying performance observed.

## Claims

1. A solvent borne coating composition comprising
a) an auto-oxidisable alkyd binder;
b) silica particles;
c) a curing accelerator, wherein the curing accelerator comprises:
(i) a manganese ion-containing salt or an iron ion-containing salt; and
(ii) an organic ligand suitable for stabilising the manganese ion-containing salt or the iron ion-containing salt, the organic ligand comprising at least two nitrogen atoms and at least two hydroxyl groups; and
d) solvent.

2. A coating composition according to claim 1 wherein the organic ligand comprises a material of Formula I: 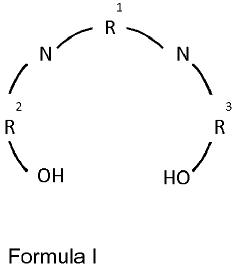 wherein R¹, R² and R³ are each divalent organic moieties.

3. A coating composition according to claim 2 wherein R¹, R² and R³ are each independently selected from optionally substituted alkylene, alkenylene, alkynylene, heteroalkylene, heteroalkenylene, heteroalkynylene, arylene, heteroarylene and cycloalkylene, wherein alkylene, alkenylene, alkynylene, heteroalkylene, heteroalkenylene and heteroalkynylene, may optionally be interrupted by aryl, heteroaryl, alicyclic or heteroalicyclic.

4. A coating composition according to either of claim 2 or claim 3 wherein R² and R³ are the same.

5. A coating composition according to any preceding claim wherein the manganese ion-containing salt or iron ion-containing salt is a carboxylate salt or a β-diketonate salt.

6. A coating composition according to claim 5 wherein the carboxylate salt or β-diketonate salt is a neodecanoate, octoate, tallate, linoleate, naphthenate, acetylacetonate, benzoylacetone, or dibenzoylmethane salt.

7. A coating composition according to any preceding claim wherein the organic ligand comprises a material of Formula II 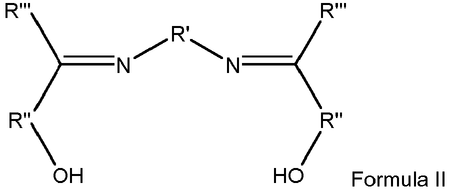
wherein R' is selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
each R" is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic
each R‴ is independently selected from hydrogen, halogen, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
and wherein when R' is a substituted alkylene, each R‴ together with a substituent on R' may form a heterocylic ring comprising the nitrogen atom or both R‴ together with more than one substituent on R' may form a heterocyclic system comprising both nitrogen atoms.

8. A coating composition according to claim 7 wherein R' comprises an optionally substituted alkylene, suitably optionally substituted ethylene or propylene.

9. A coating composition according to either of claim 7 or claim 8 wherein R" comprises an optionally substituted alkylene or arylene.

10. A coating composition according to claim 9 wherein R" comprises an optionally substituted arylene, such as phenylene, suitably 1,2-phenylene.

11. A coating composition according to any of claims 7 to 10 wherein both R‴ together with more than one substituent on R' forms a bipyridylene or phenanthrolylene group comprising both nitrogen atoms.

12. A coating composition according to any of claims 7-11 wherein the organic ligand is a ligand of Formula III 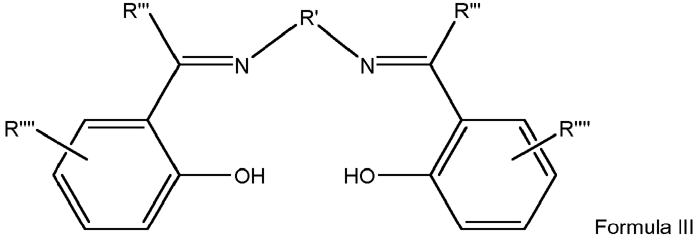
wherein R' is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic;
each R‴ is independently selected from hydrogen, halogen, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group;
each Rʺʺ is independently selected from hydrogen, halogen, a nitro group, a nitrile group, an imine, an amine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group; and
and wherein when R' is a substituted alkylene, each R‴ together with a substituent on R' may form a heterocylic ring comprising the nitrogen atom or both R‴ together with more than one substituent on R' may form a heterocyclic system comprising both nitrogen atoms.

13. A coating composition according to any of claims 7-11 wherein the organic ligand is a ligand of Formula IV 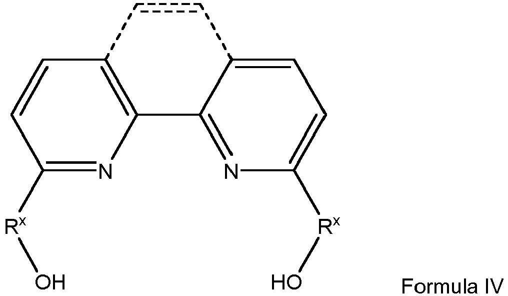
wherein R^{x} is independently selected from optionally substituted alkylene, alkenylene, alkynylene, heteroalkylene, heteroalkenylene, heteroalkynylene, arylene, heteroarylene or cycloalkylene, wherein alkylene, alkenylene, alkynylene, heteroalkylene, heteroalkenylene and heteroalkynylene, may optionally be interrupted by aryl, heteroaryl, alicyclic or heteroalicyclic; and
wherein 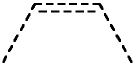 is optionally present.

14. A coating composition according to any of claims 7-11 wherein the organic ligand is selected from: 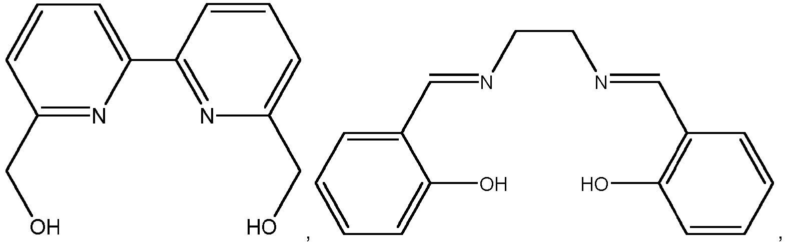 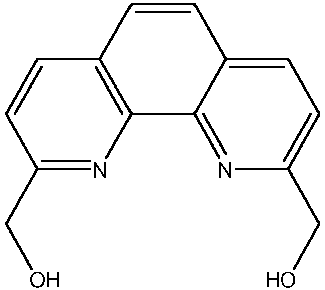 or

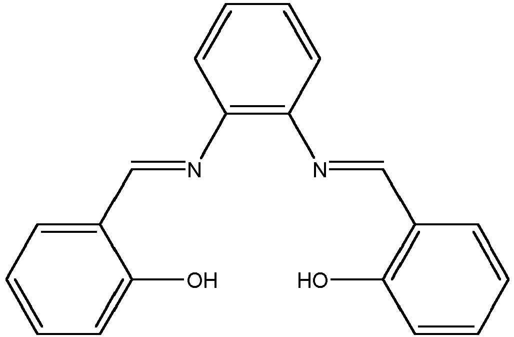

15. Use of the coating composition according to any preceding claim in a varnish, lacquer, paint, stain, enamel, printing ink or floor covering.

## Patentansprüche

1. Lösungsmittelhaltige Beschichtungszusammensetzung, umfassend
a) ein autoxidierbares Alkydbindemittel;
b) Siliciumdioxidteilchen;
c) einen Härtungsbeschleuniger, wobei der Härtungsbeschleuniger Folgendes umfasst:
(i) ein manganionenhaltiges Salz oder ein eisenionenhaltiges Salz; und
(ii) einen organischen Liganden, der zur Stabilisierung des manganionenhaltigen Salzes oder eisenionenhaltigen Salzes geeignet ist, wobei der organische Ligand mindestens zwei Stickstoffatome und mindestens zwei Hydroxylgruppen umfasst; und
d) Lösungsmittel.

2. Beschichtungszusammensetzung nach Anspruch 1, wobei der organische Ligand eine Substanz in Formel I umfasst: 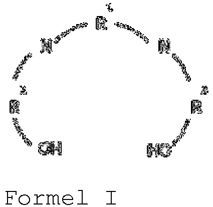 wobei R¹, R² und R³ jeweils für zweiwertige organische Gruppierungen stehen.

3. Beschichtungszusammensetzung nach Anspruch 2, wobei R¹, R² und R³ jeweils unabhängig aus gegebenenfalls substituiertem Alkylen, Alkenylen, Alkinylen, Heteroalkylen, Heteroalkenylen, Heteroalkinylen, Arylen, Heteroarylen und Cycloalkylen ausgewählt sind, wobei Alkylen, Alkenylen, Alkinylen, Heteroalkylen, Heteroalkenylen und Heteroalkinylen gegebenenfalls durch Aryl, Heteroaryl, Alicyclyl oder Heteroalicyclyl unterbrochen sein können.

4. Beschichtungszusammensetzung nach Anspruch 2 Anspruch 3, wobei R² und R³ gleich sind.

5. Beschichtungszusammensetzung nach einem der vorhergehenden Ansprüche, wobei es sich bei dem manganionenhaltigen Salz oder eisenionenhaltigen Salz um ein Carboxylatsalz oder ein β-Diketonatsalz handelt.

6. Beschichtungszusammensetzung nach Anspruch 5, wobei es sich bei dem Carboxylatsalz oder β-Diketonatsalz um ein Neodecanoat-, Octoat-, Tallat-, Linoleat-, Naphthenat-, Acetylacetonat-, Benzoylaceton- oder Dibenzoylmethansalz handelt.

7. Beschichtungszusammensetzung nach einem der vorhergehenden Ansprüche, wobei der organische Ligand eine Substanz der Formel II umfasst: 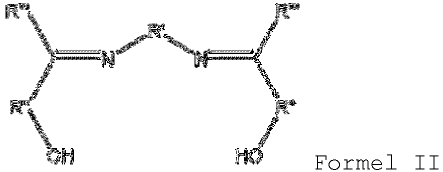
wobei R' aus gegebenenfalls substituiertem Alkylen, Alkenylen, Alkinylen, Heteroalkylen, Heteroalkenylen, Heteroalkinylen, Arylen, Heteroarylen oder Cycloalkylen ausgewählt ist, wobei Alkylen, Alkenylen, Alkinylen, Heteroalkylen, Heteroalkenylen und Heteroalkinylen gegebenenfalls durch Aryl, Heteroaryl, Alicyclyl oder Heteroalicyclyl unterbrochen sein können;
R" jeweils unabhängig aus gegebenenfalls substituiertem Alkylen, Alkenylen, Alkinylen, Heteroalkylen, Heteroalkenylen, Heteroalkinylen, Arylen, Heteroarylen oder Cycloalkylen ausgewählt ist, wobei Alkylen, Alkenylen, Alkinylen, Heteroalkylen, Heteroalkenylen und Heteroalkinylen gegebenenfalls durch Aryl, Heteroaryl, Alicyclyl oder Heteroalicyclyl unterbrochen sein können; R‴ jeweils unabhängig aus Wasserstoff, Halogen, einer Nitrogruppe, einer Nitrilgruppe, einem Imin, einem Amin, einer Ethergruppe, einer Silylgruppe, einer Silylethergruppe, einer Sulfoxidgruppe, einer Sulfonylgruppe, einer Sulfinatgruppe oder einer Acetylidgruppe oder einer gegebenenfalls substituierten Alkyl-, Alkenyl-, Alkinyl-, Halogenalkyl-, Aryl-, Heteroaryl-, Alkoxy-, Aryloxy-, Alkylthio-, Arylthio-, Alicyclyl- oder Heteroalicyclylgruppe ausgewählt ist;
und wobei dann, wenn R' für ein substituiertes Alkylen steht, R‴ jeweils zusammen mit einem Substituenten an R' einen heterocyclischen Ring, der das Stickstoffatom umfasst, bilden können oder beide R‴ zusammen mit mehr als einem Substituenten an R' ein heterocyclisches System, das beide Stickstoffatome umfasst, bilden können.

8. Beschichtungszusammensetzung nach Anspruch 7, wobei R' ein gegebenenfalls substituiertes Alkylen, geeigneterweise gegebenenfalls substituiertes Ethylen oder Propylen, umfasst.

9. Beschichtungszusammensetzung nach Anspruch 7 oder Anspruch 8, wobei R" ein gegebenenfalls substituiertes Alkylen oder Arylen umfasst.

10. Beschichtungszusammensetzung nach Anspruch 9, wobei R' ' ein gegebenenfalls substituiertes Arylen, wie Phenylen, geeigneterweise 1,2-Phenylen, umfasst.

11. Beschichtungszusammensetzung nach einem der Ansprüche 7 bis 10, wobei beide R‴ zusammen mit mehr als einem Substituenten an R' eine Bipyridylen- oder Phenanthrolylengruppe, die beide Stickstoffatome umfasst, bilden.

12. Beschichtungszusammensetzung nach einem der Ansprüche 7-11, wobei es sich bei dem organischen Liganden um einen Liganden der Formel III handelt: 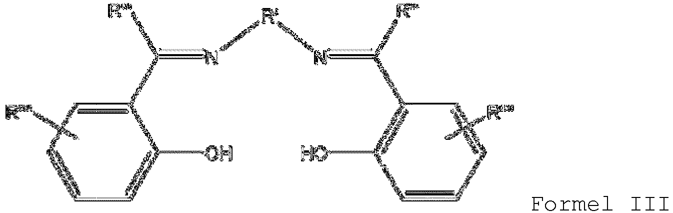
wobei R' jeweils unabhängig aus gegebenenfalls substituiertem Alkylen, Alkenylen, Alkinylen, Heteroalkylen, Heteroalkenylen, Heteroalkinylen, Arylen, Heteroarylen oder Cycloalkylen ausgewählt ist, wobei Alkylen, Alkenylen, Alkinylen, Heteroalkylen, Heteroalkenylen und Heteroalkinylen gegebenenfalls durch Aryl, Heteroaryl, Alicyclyl oder Heteroalicyclyl unterbrochen sein können; R‴ jeweils unabhängig aus Wasserstoff, Halogen, einer Nitrogruppe, einer Nitrilgruppe, einem Imin, einem Amin, einer Ethergruppe, einer Silylgruppe, einer Silylethergruppe, einer Sulfoxidgruppe, einer Sulfonylgruppe, einer Sulfinatgruppe oder einer Acetylidgruppe oder einer gegebenenfalls substituierten Alkyl-, Alkenyl-, Alkinyl-, Halogenalkyl-, Aryl-, Heteroaryl-, Alkoxy-, Aryloxy-, Alkylthio-, Arylthio-, Alicyclyl- oder Heteroalicyclylgruppe ausgewählt ist;
Rʺʺ jeweils unabhängig aus Wasserstoff, Halogen, einer Nitrogruppe, einer Nitrilgruppe, einem Imin, einem Amin, einer Ethergruppe, einer Silylgruppe, einer Silylethergruppe, einer Sulfoxidgruppe, einer Sulfonylgruppe, einer Sulfinatgruppe oder einer Acetylidgruppe oder einer gegebenenfalls substituierten Alkyl-, Alkenyl-, Alkinyl-, Halogenalkyl-, Aryl-, Heteroaryl-, Alkoxy-, Aryloxy-, Alkylthio-, Arylthio-, Alicyclyl- oder Heteroalicyclylgruppe ausgewählt ist; und
und wobei dann, wenn R' für ein substituiertes Alkylen steht, R‴ jeweils zusammen mit einem Substituenten an R' einen heterocyclischen Ring, der das Stickstoffatom umfasst, bilden können oder beide R‴ zusammen mit mehr als einem Substituenten an R' ein heterocyclisches System, das beide Stickstoffatome umfasst, bilden können.

13. Beschichtungszusammensetzung nach einem der Ansprüche 7-11, wobei es sich bei dem organischen Liganden um einen Liganden der Formel IV handelt: 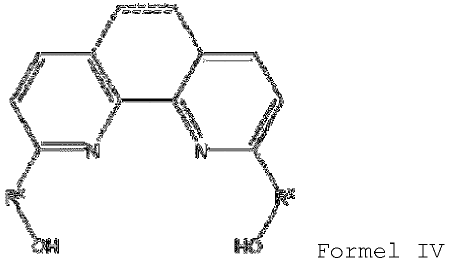
wobei R^{x} jeweils unabhängig aus gegebenenfalls substituiertem Alkylen, Alkenylen, Alkinylen, Heteroalkylen, Heteroalkenylen, Heteroalkinylen, Arylen, Heteroarylen oder Cycloalkylen ausgewählt ist, wobei Alkylen, Alkenylen, Alkinylen, Heteroalkylen, Heteroalkenylen und Heteroalkinylen gegebenenfalls durch Aryl, Heteroaryl, Alicyclyl oder Heteroalicyclyl unterbrochen sein können; und
wobei 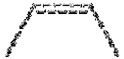 gegebenenfalls vorliegt.

14. Beschichtungszusammensetzung nach einem der Ansprüche 7-11, wobei der organische Ligand aus 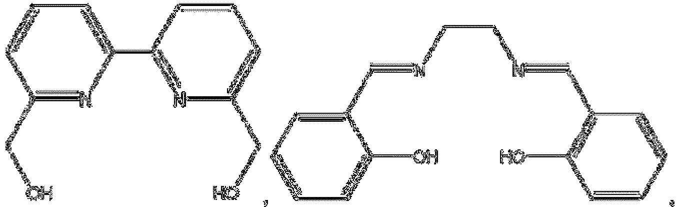 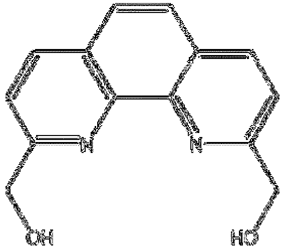 oder 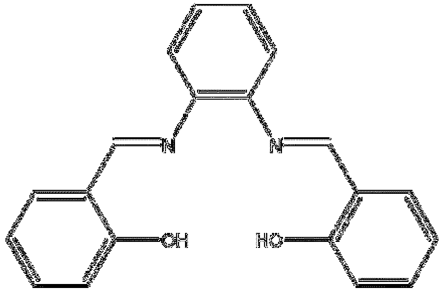 ausgewählt ist.

15. Verwendung der Beschichtungszusammensetzung nach einem der vorhergehenden Ansprüche in einem Klarlack, einem Lack, einem Anstrichmittel, einer Beize, einer Emaille, einer Druckfarbe oder einem Bodenbelag.

## Revendications

1. Composition de revêtement à base de solvant comprenant
a) un liant à base d'alkyde auto-oxydable ;
b) des particules de silice ;
c) un accélérateur de durcissement, l'accélérateur de durcissement comprenant :
(i) un sel contenant un ion manganèse ou un sel contenant un ion fer ; et
(ii) un ligand organique adapté pour stabiliser le sel contenant un ion manganèse ou le sel contenant un ion fer, le ligand organique comprenant au moins deux atomes d'azote et au moins deux groupes hydroxyle ; et
d) un solvant.

2. Composition de revêtement selon la revendication 1 dans laquelle le ligand organique comprend un matériau de formule I : 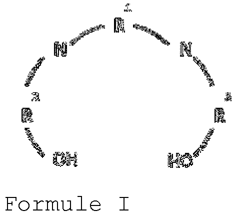 dans laquelle R¹, R² et R³ sont chacun des fragments organiques divalents.

3. Composition de revêtement selon la revendication 2 dans laquelle R¹, R² et R³ sont chacun indépendamment choisis parmi alkylène, alcénylène, alcynylène, hétéroalkylène, hétéroalcénylène, hétéroalcynylène, arylène, hétéroarylène et cycloalkylène, où alkylène, alcénylène, alcynylène, hétéroalkylène, hétéroalcénylène et hétéroalcynylène facultativement substitués peuvent facultativement être interrompus par un groupe aryle, hétéroaryle, alicyclique ou hétéroalicyclique.

4. Composition de revêtement selon la revendication 2 ou la revendication 3 dans laquelle R² et R³ sont identiques.

5. Composition de revêtement selon l'une quelconque des revendications précédentes dans laquelle le sel contenant un ion manganèse ou sel contenant un ion fer est un sel de carboxylate ou un sel de β-dicétonate.

6. Composition de revêtement selon la revendication 5 dans laquelle le sel de carboxylate ou sel de β-dicétonate est un sel de néodécanoate, octoate, tallate, linoléate, naphténate, acétylacétonate, benzoylacétone ou dibenzoylméthane.

7. Composition de revêtement selon l'une quelconque des revendications précédentes dans laquelle le ligand organique comprend un matériau de formule II 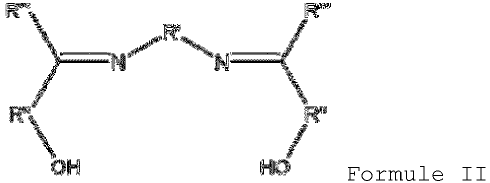
dans laquelle R' est choisi parmi alkylène, alcénylène, alcynylène, hétéroalkylène, hétéroalcénylène, hétéroalcynylène, arylène, hétéroarylène ou cycloalkylène, où alkylène, alcénylène, alcynylène, hétéroalkylène, hétéroalcénylène et hétéroalcynylène facultativement substitués peuvent facultativement être interrompus par un groupe aryle, hétéroaryle, alicyclique ou hétéroalicyclique ;
chaque R" est indépendamment choisi parmi alkylène, alcénylène, alcynylène, hétéroalkylène, hétéroalcénylène, hétéroalcynylène, arylène, hétéroarylène ou cycloalkylène facultativement substitué, où alkylène, alcénylène, alcynylène, hétéroalkylène, hétéroalcénylène et hétéroalcynylène peuvent facultativement être interrompus par un groupe aryle, hétéroaryle, alicyclique ou hétéroalicyclique chaque R‴ est indépendamment choisi parmi hydrogène, halogène, un groupe nitro, un groupe nitrile, une imine, une amine, un groupe éther, un groupe silyle, un groupe éther silylique, un groupe sulfoxyde, un groupe sulfonyle, un groupe sulfinate ou un groupe acétylure ou un groupe alkyle, alcényle, alcynyle, halogénoalkyle, aryle, hétéroaryle, alcoxy, aryloxy, alkylthio, arylthio, alicyclique ou hétéroalicyclique facultativement substitué ;
et dans laquelle, lorsque R' est un alkylène substitué, chaque R‴, conjointement avec un substituant sur R', peut former un cycle hétérocylique comprenant l'atome d'azote ou les deux R‴, conjointement avec plus d'un substituant sur R', peut former un système hétérocyclique comprenant les deux atomes d'azote.

8. Composition de revêtement selon la revendication 7 dans laquelle R' comprend un alkylène facultativement substitué, de manière appropriée éthylène ou propylène facultativement substitué.

9. Composition de revêtement selon la revendication 7 ou la revendication 8 dans laquelle R" comprend un alkylène ou arylène facultativement substitué.

10. Composition de revêtement selon la revendication 9 dans laquelle R" comprend un arylène facultativement substitué, tel que phénylène, de manière appropriée 1,2-phénylène.

11. Composition de revêtement selon l'une quelconque des revendications 7 à 10 dans laquelle les deux R‴, conjointement avec plus d'un substituant sur R', forme un groupe bipyridylène ou phénanthrolylène comprenant les deux atomes d'azote.

12. Composition de revêtement selon l'une quelconque des revendications 7 à 11 dans laquelle le ligand organique est un ligand de formule III 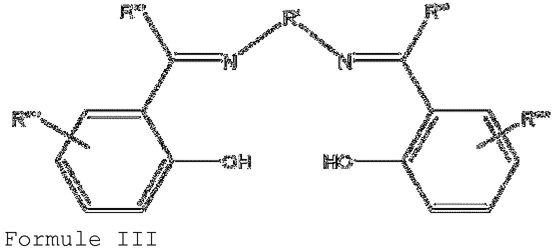
dans laquelle R' est indépendamment choisi parmi alkylène, alcénylène, alcynylène, hétéroalkylène, hétéroalcénylène, hétéroalcynylène, arylène, hétéroarylène ou cycloalkylène facultativement substitué, où alkylène, alcénylène, alcynylène, hétéroalkylène, hétéroalcénylène et hétéroalcynylène peuvent facultativement être interrompus par un groupe aryle, hétéroaryle, alicyclique ou hétéroalicyclique ; chaque R‴ est indépendamment choisi parmi hydrogène, halogène, un groupe nitro, un groupe nitrile, une imine, une amine, un groupe éther, un groupe silyle, un groupe éther silylique, un groupe sulfoxyde, un groupe sulfonyle, un groupe sulfinate ou un groupe acétylure ou un groupe alkyle, alcényle, alcynyle, halogénoalkyle, aryle, hétéroaryle, alcoxy, aryloxy, alkylthio, arylthio, alicyclique ou hétéroalicyclique facultativement substitué ;
chaque R‴′ est indépendamment choisi parmi hydrogène, halogène, un groupe nitro, un groupe nitrile, une imine, une amine, un groupe éther, un groupe silyle, un groupe éther silylique, un groupe sulfoxyde, un groupe sulfonyle, un groupe sulfinate ou un groupe acétylure ou un groupe alkyle, alcényle, alcynyle, halogénoalkyle, aryle, hétéroaryle, alcoxy, aryloxy, alkylthio, arylthio, alicyclique ou hétéroalicyclique facultativement substitué ; et
et dans laquelle, lorsque R' est un alkylène substitué, chaque R‴, conjointement avec un substituant sur R', peut former un cycle hétérocylique comprenant l'atome d'azote ou les deux R‴, conjointement avec plus d'un substituant sur R', peut former un système hétérocyclique comprenant les deux atomes d'azote.

13. Composition de revêtement selon l'une quelconque des revendications 7 à 11 dans laquelle le ligand organique est un ligand de formule IV 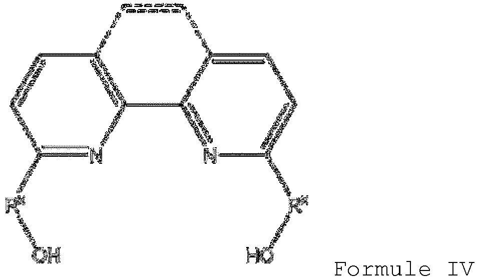
dans laquelle R^{x} est indépendamment choisi parmi alkylène, alcénylène, alcynylène, hétéroalkylène, hétéroalcénylène, hétéroalcynylène, arylène, hétéroarylène ou cycloalkylène facultativement substitué, où alkylène, alcénylène, alcynylène, hétéroalkylène, hétéroalcénylène et hétéroalcynylène peuvent facultativement être interrompus par un groupe aryle, hétéroaryle, alicyclique ou hétéroalicyclique ; et
dans laquelle 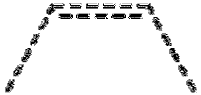 est facultativement présent.

14. Composition de revêtement selon l'une quelconque des revendications 7 à 11 dans laquelle le ligand organique est choisi parmi : 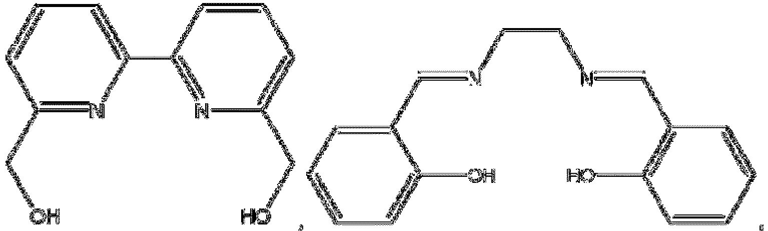 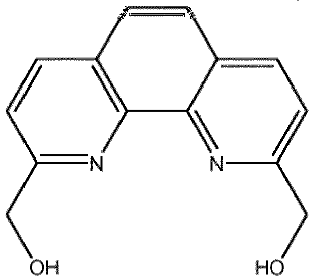 ou

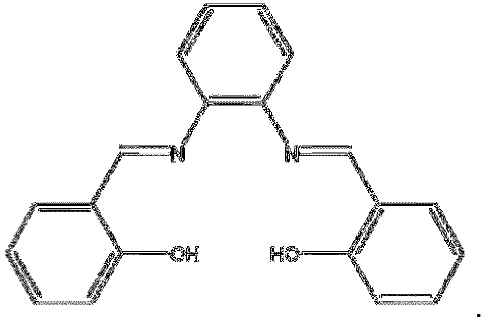

15. Utilisation de la composition de revêtement selon l'une quelconque des revendications précédentes dans un vernis, une laque, une peinture, une teinture, un émail, une encre d'impression ou un revêtement de sol.
